(19) Europäisches Patentamt
European Patent Office
Office européen des brevets

(11) Publication number: 0 383 056 A2

(12) # EUROPEAN PATENT APPLICATION

(21) Application number: 90101274.0

(51) Int. Cl.$^5$: C08G 63/91

(22) Date of filing: 23.01.90

(30) Priority: 17.02.89 US 312851

(43) Date of publication of application: 22.08.90 Bulletin 90/34

(84) Designated Contracting States: DE FR GB IT NL

(71) Applicant: GENERAL ELECTRIC COMPANY
1 River Road
Schenectady New York 12305(US)

(72) Inventor: Richards, William David
22 Heritage Parkway
Scotia, New York 12302(US)
Inventor: Yoshimura, Diana Kay
303 Guardian Court
Waterford, New York 12188(US)
Inventor: Okamoto, Kelvin Tsugio
1608 S.E. Boulevard
Evansville, Indiana 47714(US)
Inventor: McCracken, Linda Leigh
2224 Huntridge Drive
Clifton Park, New York 12065(US)

(74) Representative: Catherine, Alain et al
General Electric France Service de Propriété Industrielle 18 Rue Horace Vernet
F-92136 Issy-Les-Moulineaux Cedex(FR)

(54) **Method for preparing polyester compositions of high melt viscosity by reaction with polyeopxides.**

(57) Branched polyesters, prepared by the reaction of a polyester such as poly(butylene terephthalate) with a polyepoxy compound such as triglycidyl isocyanurate, are annealed at a temperature above the glass transition temperature of the polyester but below the melting and/or decomposition temperature. The annealed compositions have higher melt viscosities and impact strengths than similar compositions which have not been annealed.

EP 0 383 056 A2

# METHOD FOR PREPARING POLYESTER COMPOSITIONS OF HIGH MELT VISCOSITY BY REACTION WITH POLYEPOXIDES

This invention relates to the preparation of branched polyesters, and more particularly to a method for their preparation from a thermoplastic polyester and a polyepoxy compound.

Linear polyesters, exemplified by poly(ethylene terephthalate) and poly(butylene terephthalate) (hereinafter "PET" and "PBT", respectively), are in wide industrial use for the preparation of articles by such forming methods as injection molding. Many of their properties, including chemical stability, solvent resistance and low permeability to gas, make them attractive candidates for such forming operations as blow molding, profile extrusion and thermoforming. One problem in such operations is the relatively low melt viscosities of the polyesters, as a result of which the formed articles do not adequately retain their shape immediately after forming and before they have cooled.

In recent years, methods have been developed for increasing the melt viscosities and melt strengths of such polyesters. For example, Japanese Kokai 75/96648 and Japanese Kokai 81/116749 describe the reaction of various thermoplastic polyesters with triglycidyl isocyanurate (hereinafter "TGIC"). In this reaction, a branched polyester is apparently formed by reaction of carboxylic acid end groups of the polyester with each of the epoxy groups. By reason of this branching, the polyester displays low viscosity at high shear rates, as during extrusion, and high viscosity and melt elasticity at low shear rates, as during hanging of a blow-molded parison, which ensures dimensional stability.

Still more recently, improved methods for conducting this reaction have been developed. For example, application Serial No. 184,534, filed April 21, 1988, describes the initial preparation of a reactive concentrate by the reaction of a relatively large amount of the polyepoxide with a linear polyester having a measurable proportion of free carboxylic acid end groups. The reactive concentrate is then melt blended with further linear polyester to form the desired branched polyester product. A somewhat different method, employing a concentrate in which the polymer is non-reactive with the polyepoxide, is the subject of application Serial No. 125,859, filed November 27, 1987. Both applications are copending and commonly owned herewith.

Melt blending methods of this type involving thermoplastic polyesters such as PET or PBT inevitably cause some degradation of the polyester; such polyesters decrease substantially in stability in the melt. This is true even if the branching reaction has taken place, and it leads to resins with shorter branches and lower molecular weight. Lower melt viscosities are one of the results of such degradation.

Another problem encountered with such polyepoxides as TGIC is thermal decomposition with the evolution of undesirable by-products, such as acrolein. The proportion of such by-products can be materially decreased by minimizing the amount of unreacted TGIC in the product.

Thus, means for optimizing the yield of the reaction product of the polyester and polyepoxy compound while suppressing degradation of the polyester both before and after branching are desirable. The present invention provides such means, and also provides branched polyester compositions characterized by improved impact strength when measured by the "Dynatup" method.

Accordingly, the invention in one of its aspects is a method for improving the properties of a composition comprising the reaction product of at least one linear polyester having a substantial proportion of free carboxylic acid groups and at least one polyepoxy compound, which comprises annealing said composition at a temperature above the glass transition temperature of said polyester but below the temperatures at which melting of said polyester and substantial degradation of said reaction product occur.

The polyesters useful in the method of this invention typically comprise structural units of the formula

$$-O-R^1-O-\overset{O}{\overset{\|}{C}}-R^2-\overset{O}{\overset{\|}{C}}-,$$

wherein each $R^1$ is independently a divalent aliphatic, alicyclic or aromatic radical containing about 2-10 carbon atoms and each $R^2$ is independently a divalent aliphatic, alicyclic or aromatic radical containing about 2-10 and usually about 6-10 carbon atoms. Polyesters containing such units may be prepared by the known reaction of dihydroxy compounds with dicarboxylic acids or functional derivatives thereof such as anhydrides, acid chlorides or lower alkyl (especially methyl) esters, preferably the esters.

The $R^1$ radicals may be one or more aliphatic or alicyclic hydrocarbon radicals containing about 2-10 carbon atoms, alicyclic radicals being known to those skilled in the art to be equivalent to aliphatic radicals for the purposes of the invention. They are most often derived from aliphatic or alicyclic dihydroxy compounds such as ethylene glycol, 1,4-butanediol, propylene glycol, 1,3-propanediol, 1,6-hexanediol, 1,10-decanediol, 1,4-cyclohexanedimethanol and 2-butene-1,4-diol. Aromatic dihydroxy compounds, especially bisphenols such as bisphenol A, may also be employed. The $R^1$ radicals may also contain substituents which do not substantially alter the reactivity of the dihydroxy compound (e.g., alkoxy, halo, nitrile) or hetero

atoms (e.g., oxygen or sulfur). The aliphatic and alicyclic $R^1$ radicals are usually saturated.

The $R^2$ radicals may be derived from such acids as succinic, adipic, maleic, isophthalic and terephthalic acids or similar substituted and hetero atom-containing acids.

Also contemplated are polymers in which at least a portion of the $R^1$ and/or $R^2$ values are soft segment radicals such as poly(oxyethylene) or poly(oxybutylene). Such polymers may be prepared by incorporating compounds such as polyethylene glycol, caprolactone or dicarboxylic acids containing polyoxyalkylene segments in the polymerization reaction, and are typically elastomeric. Illustrative polyesters of this type are available from DuPont and General Electric under the trade names HYTREL and LOMOD, respectively.

Preferably, $R^1$ and $R^2$ are hydrocarbon radicals, typically containing about 2-10 and preferably 2-6 carbon atoms. Most often, $R^1$ is aliphatic and $R^2$ is aromatic. The polymer is most desirably a poly(alkylene terephthalate), particularly PET or PBT and especially the latter. It usually has a number average molecular weight of at least about 4000, preferably in the range of about 10,000-70,000, as determined by gel permeation chromatography or by intrinsic viscosity (IV) at 30°C in a mixture of 60% (by weight) phenol and 40% 1,1,2,2-tetrachloroethane.

For the purposes of this invention, it is essential that the polyester have a measurable proportion of free carboxylic acid groups, as determined by titration. These will usually be end groups, and their concentration is conventionally measured as microequivalents per gram.

For the most part, a carboxylic acid group concentration in the range of about 5-250 microequivalents per gram is suitable. Polyesters may degrade to some extent on extrusion, increasing the concentration of such end groups and, correspondingly, the proportion of available reaction sites. It is, however, often preferred to employ polyesters having a carboxylic acid end group concentration in the range of about 10-100, especially about 30-100 and preferably about 40-80 microequivalents per gram.

Many types of polyepoxy compounds are known in the art and any of them are capable of use in the present invention. However, the preferred polyepoxy compounds are poly(O-or N-epoxyalkyl-substituted) cyclic amides, imides and imidates, usually containing one non-epoxy cyclic moiety although compounds with linked or fused moieties are also contemplated.

Most often, the epoxyalkyl groups are bonded directly to the oxygen or nitrogen atoms; however, compounds containing intervening structure, such as 2-carboglycidyloxyethyl compounds, may also be used. The presence of more than one epoxy group per molecule is essential. At least three of such groups are highly preferred, with three and only three being especially preferred, by reason of the ease of preparation therefrom of branched polyesters with a minimum of crosslinking and resulting gel formation.

Illustrative cyclic nuclei which may be present are the triazine, barbiturate, hydantoin, uracil, pyromellitic diimide, piperazinedione and parabanate ring system. As previously noted, the epoxy-containing functionalities may be present as substituents on oxygen or nitrogen atom therein, with nitrogen atoms frequently being preferred. The most suitable compounds are triazine derivatives, including triglycidyl cyanurate and TGIC. TGIC is particularly preferred by reason of its availability and particular suitability for the formation of branched polyesters. It has the formula

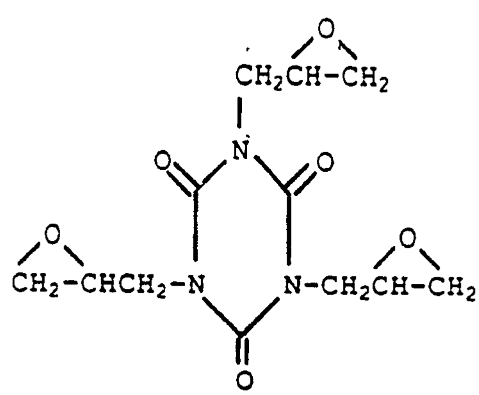

The reaction between the polyester and polyepoxy compound may be effected by conventional blending methods. Melt blending methods are typically employed, frequently preceded by a dry blending step. A melt blending operation which is often preferred is extrusion, ordinarily at temperatures in the range of about 200-300°C.

TGIC and similar compounds are typically supplied as powders which may agglomerate into coarse particles. These particles are frequently difficult to mix uniformly with the other components during

extrusion, and may result in regions of gel formation which produce flaw sites in formed articles. Moreover, many such compounds are irritants and/or health hazards. For example, TGIC has mutagenic properties. Contact with the body and inhalation should therefore be avoided as much as possible.

For this reason, it is frequently preferred to initially prepare a concentrate by blending a relatively large amount of the polyepoxide with the polyester. Concentrates of this type may be prepared by melt blending or solution blending techniques as appropriate, and typically contain about 3-20 parts by weight of polyepoxide per 100 parts of polyester.

The concentrates thus prepared are essentially indistinguishable in appearance and physical behavior from the resin used for their preparation. No obvious indicia of phase separation are observed therein. The concentrate is dust-free and may be handled with minimum skin contact with and inhalation of the polyepoxide. It may be readily pelletized for easy handling. By the preparation of (for example) one batch of such a concentrate, continued or repeated handling of polyepoxide is made unnecessary. Reference is again made to the aforementioned copending applications Serial Nos. 125,859 and 184,534 for further details of the preparation of branched polyester compositions via concentrates.

An essential feature of the present invention is the step of annealing the polyester-polyepoxy compound composition. The annealing temperature is not critical, provided it is above the glass transition temperature of the polyester and below the temperatures at which either melting thereof or substantial degradation of the reaction product of the polyester and polyepoxy compound occur. For crystalline polyesters such as PBT, annealing is conducted at a temperature between the glass transition temperature and the crystalline melting temperature; that is, in the solid state. In the specific case of PBT, annealing is most often in the range of about 75-220 °C and preferably about 100-200 °C.

The annealing step may be performed on the unformed resin directly after extrusion. However, it is frequently convenient to prepare molded parts and subsequently perform the annealing step. Since parts molded from thermoplastic polyesters are frequently dried after molding or baked after they have been painted, the annealing step is often conveniently consolidated with such drying and/or baking. When the polyester composition is to be shaped by thermoforming, it may be possible to modify a prior warming operation to include annealing.

In general, the increase in melt viscosity effected by the method of this invention is directly proportional to the annealing time and temperature. From a practical standpoint, annealing times of up to about 24 hours are generally sufficient.

It is possible, by the method of this invention, to produce branched polyester resins having substantially higher melt viscosities and impact strengths by annealing for a suitable period. Therefore, compositions prepared by the method described herein are another aspect of the invention. Alternatively, a smaller proportion of polyepoxy compound can be employed with annealing to afford a product having a melt viscosity equal to that obtained by the use of substantially more polyepoxy compound in the absence of the annealing step.

The method of this invention is illustrated by the following examples. All parts are by weight.

## Example 1

A PBT having a number average molecular weight (as determined by gel permeation chromatography) of about 50,000 and a carboxylic acid end group concentration of about 45 meq./g. was dried for 4 hours at 120 °C in a circulating air oven. One hundred parts of the PBT was blended with 3.5 parts of TGIC and the mixture was extruded on a 20-mm. twin screw extruder at 400 rpm. and 266 °C. The extrudate was quenched in water, pelletized and redried.

A portion of the reactive concentrate thus obtained was dry blended with further PBT to a TGIC concentration of 0.35% and the blend was extruded on a 64-mm. single screw extruder at 50 rpm. and 250-260 °C. Samples of the extrudate were molded into test specimens which were annealed in a vacuum oven for various times at 120° or 160 °C. Films produced from the annealed test specimens were analyzed to determine percent conversion to branched polyester, by Fourier transform infrared spectroscopy to determine the percentage of secondary hydroxyl formed by ring-opening of epoxy groups. The viscosities of the samples were determined on a Rheometrics Dynamic Spectrometer at 240 °C and 0.1 rad./sec. The results are given in Table I.

TABLE I

| Annealing temp., °C | Annealing time, hrs. | % conversion | Viscosity, kilopoises |
|---|---|---|---|
| Control | 0 | 71 | 160 |
| 120 | 8 | 74 | 200 |
| " | 24 | 72 | 220 |
| " | 46 | 73 | 230 |
| " | 52 | 73 | 250 |
| " | 125 | 75 | 310 |
| " | 198 | 76 | 410 |
| " | 358 | 79 | 550 |
| 160 | 21 | 78 | 470 |

It is apparent that the viscosity increases materially upon annealing, even for a period as short as 8 hours at 120°C. Still higher viscosities, generally accompanied by an increase in percent conversion to branched polymer, are observed at longer annealing times and/or higher annealing temperatures.

Example 2

Test specimens were molded as described in Example 1, except that the TGIC concentration was 0.25%, and were annealed at various temperatures and for various times. They were then tested for Dynatup impact strength according to ASTM procedure D3763. The results are given in Table II.

TABLE II

| Annealing temp., °C | Annealing time, hrs. | Impact strength, KPa. |
|---|---|---|
| Control | 0 | 299 |
| 80 | 24 | 292 |
| " | 336 | 301 |
| 120 | 120 | 315 |
| " | 240 | 313 |
| " | 336 | 325 |
| 160 | 2 | 325 |
| " | 8 | 324 |
| " | 23 | 321 |
| " | 48 | 325 |
| 200 | 0.5 | 319 |
| " | 2 | 322 |
| " | 4 | 328 |

## Claims

1. A method for improving the properties of a composition comprising the reaction product of at least one linear polyester having a substantial proportion of free carboxylic acid groups and at least one polyepoxy compound, which comprises annealing said composition at a temperature above the glass transition temperature of said polyester but below the temperatures at which melting of said polyester and substantial degradation of said reaction product occur.

2. A method according to claim 1 wherein the polyepoxy compound is a poly(O- or N-epoxyalkyl-substituted) cyclic amide, imide or imidate.

3. A method according to claim 2 wherein the polyester comprises structural units of the formula

$$-O-R^1-O-\overset{\overset{O}{\|}}{C}-R^2-\overset{\overset{O}{\|}}{C}-,$$

wherein each $R^1$ is independently a divalent aliphatic, alicyclic or aromatic radical containing about 2-10 carbon atoms and each $R^2$ is independently a divalent aliphatic, alicyclic or aromatic radical containing about 2-10 and usually about 6-10 carbon atoms.

4. A method according to claim 3 wherein the polyepoxy compound contains a single triazine, barbiturate, hydantoin, uracil, pyromellitic diimide, piperazinedione or parabanate moiety and the epoxyalkyl groups therein are bonded directly to oxygen or nitrogen atoms.

5. A method according to claim 4 wherein the polyepoxy compound is triglycidyl isocyanurate.

6. A method according to claim 3 wherein the polyester is a poly(ethylene terephthalate) or a poly-(butylene terephthalate) having a carboxylic acid end group concentration in the range of about 10-100 microequiva lents per gram and the annealing temperature is below the crystalline melting temperature of said polyester.

7. A method according to claim 6 wherein about 0.1-3.0 parts by weight of polyepoxy compound is employed per 100 parts of polyester.

8. A method according to claim 7 wherein the polyester is poly(butylene terephthalate).

9. A method according to claim 8 wherein the annealing temperature is in the range of about 100-200° C.

10. A method according to claim 9 wherein the annealing time is up to about 24 hours.

11. A method according to claim 10 wherein the polyepoxy compound contains a single triazine, barbiturate, hydantoin, uracil, pyromellitic diimide, piperazinedione or parabanate moiety and the epoxyalkyl groups therein are bonded directly to oxygen or nitrogen atoms.

12. A method according to claim 11 wherein the polyepoxy compound is triglycidyl isocyanurate.

13. A composition prepared by the method of claim 1.

14. A composition prepared by the method of claim 2.

15. A composition prepared by the method of claim 3.

16. A composition prepared by the method of claim 4.

17. A composition prepared by the method of claim 5.

18. A composition prepared by the method of claim 7.

19. A composition prepared by the method of claim 11.

20. A composition prepared by the method of claim 12.